# EUROPÄISCHE PATENTANMELDUNG

(11) **EP 1 615 019 A1**
(43) Veröffentlichungstag der Anmeldung: **11.01.2006**
(21) Anmeldenummer: 05014333.8
(22) Anmeldetag: 01.07.2005
(51) Int. Cl.: G01N 27/12, G01M 3/04, G01M 3/16, G01N 33/38

(54) **Anlage zur Feuchtigkeitsermittlung**

(30) Priorität: 09.07.2004 IT BZ20040033
(71) Anmelder: EUROTHERM S.P.A., 39010 Appiano (Bolzano) (IT)
(72) Erfinder: Cleto, Pezzei, 39057 Appiano (BZ) (IT)
(74) Vertreter: Oberosler, Ludwig

(57) **Zusammenfassung**

Anlage zur Feuchtigkeitsermittlung unter isolierenden und/oder wasserdichten Abdeckungen von Bodensohlen, Terrassen, Fußböden oder von Unterbetonplatten für Bodenheizung/-kühlung, bestehend aus einem Spannungsmesser (T) oder einem Gerät zur Ermittlung der elektrischen Leitfähigkeit, bzw. der elektrischen Dispersion, welches mit einem akustischem und/oder optischem Signalgeber (L) ausgestattet ist, wobei dieser Spannungsmesser oder dieses Messinstrument (T) elektrisch mit mindestens zwei Leitersystemen (1, 2), zwei Systeme von Leiterschleifen (A; B, C; X, Z) oder zwei Leitemetzen oder Leiterflächen (7, 7a) verbunden ist von denen beide in direktem Kontakt auf einer der horizontalen Flächen einer Unterbetonplatte einer Bodenheizung/-kühlung oder einer Bodensohle verlegt sind ohne zueinander in direktem Kontakt zu stehen.

## Beschreibung

Die Erfindung bezieht sich auf eine Anlage zur elektronischen Ermittlung der Feuchtigkeit welche sich eventuell unter isolierenden oder wasserdichten Hüllen oder unter anderen, auf Bodensohlen, Fußböden, Mauern oder Unterbetonplatten mit Rohrserpentinen für die Heizung/Kühlung, verlegten Elementen, infolge Rohrleckstellen oder Überschreiten des Taupunktes bei Nutzung der Rohrserpentinen für die Kühlung durch Kaltwasserdurchfluss bildet.

Es sind Ermittlungsmethoden bekannt welche die Veränderung der Leitfähigkeit von Stoffen, in Bezug auf das in diesen enthaltene Wasser, messen. Diese, auf der Leitfähigkeit basierenden, Ermittlungen werden zum Beispiel für die Ermittlung der Feuchtigkeit im Holz angewandt dabei wird an einem Instrument mit Messskala die Stromstärke angezeigt welche zur elektrischen Leitfähigkeit des, zwischen zwei in unveränderbarem Abstand angeordneten Elektroden befindlichen Holzes durch welches ein Messstrom fließt, proportional ist; die elektrische Leitfähigkeit des Holzes variiert, innerhalb bestimmter Grenzen, proportional mit dem Ändern des Feuchtigkeitsgrades des Holzes.

Während für die Ermittlung der, durch Kondensierung gebildeten, Feuchtigkeit an den Oberflächen der Unterbetonplatten keine technischen Ermittlungssysteme oder Vorrichtungen bekannt sind, werden heutzutage, bei eventuellen Leckstellen an Heizungsrohren welche in den Unterbetonplatten eingegossen sind, eher arbeitsaufwändige, teuere und ungenaue thermographische Ermittlungen durchgeführt welche zudem meist nur im Winter, bei laufender Heizungsanlage, durchführbar sind.

Das Überschreiten des Taupunktes während dem sommerlichen Kühlbetrieb einer Anlage bringt die Bildung von Kondenswasser mit sich und zwar wenn in jenem Bereich der Unterbetonplatte wo die Temperaturdifferenz zwischen der Unterbetonplatte und der Raumluft, bzw. der Oberfläche eines mit der Unterbetonplatte in Berührung stehenden Elementes, so hoch ist dass, in Abhängigkeit der relativen Luftfeuchtigkeit, am kältesten Bereich der Oberfläche der Unterbodenplatte die Kondensation der, in der Luft enthaltenen, Wasserteilchen erfolgt. Diese Kondenswasserbildung ist die Ursache von Schimmelbildung, von Schäden an den Elementen (Bodenbeläge, Isolierung, Teile von Tür- und Fensterstöcken) welche mit der feuchten Unterbetonplatte in Berührung sind oder dem Kondenswasser ausgesetzt sind welches sich an der Unterbetonplatte bildet, weiters werden dadurch die Voraussetzungen eines gesunden Wohnklimas negativ beeinflusst.

Die Erfindung stellt sich die Aufgabe ein System und eine Anlage zur Überprüfung und Ermittlung eventueller feuchter oder nasser Bereiche auf oder in der Unterbetonplatte zu schaffen welche durch das Überschreiten des Taupunktes oder durch eine Leckstelle entstanden sind, dabei soll die Ermittlung schnell, preisgünstig und auch bei nicht funktionierender Heiz-/Kühlanlage durchführbar sein.

Zur Lösung dieser Aufgabe schlägt die Erfindung eine Ermittlungsmethode vor welche auf die Veränderung der elektrischen Leitfähigkeit der Masse der Unterbetonplatte mit den Heiz-/Kühlserpentinen, bei Veränderung des Feuchtigkeitsgrades dieser Masse, nutzt. Erfindungsgemäß kann die Ermittlung für jede einzelne der Unterbetonplatten welche die einzelnen Heiz-/Kühlzonen der Anlage definieren insgesamt erfolgen oder betreffend einzelne Bereiche auf jeder der Unterbetonplatten durchgeführt werden, wobei die Möglichkeit gegeben ist jenen Bereich, wo ein bestimmter Feuchtigkeitswert überschritten ist, präzise festzustellen. Diese letztere Variante ist geeignet um, z.B. eine Leckstelle an einem Rohr oder ein Einsickern von Wasser von außen, z.B. von einer Terrasse, einem Balkon, einem Dachanschluss usw., lokalisieren zu können.

Für die Ermittlung insgesamt an einer Unterbetonplatte, schlägt die Erfindung vor, elektrische Leiter in Kontakt mit der Platte oder in dieser vollständig oder teilweise eingegossen vorzusehen, ohne den Einsatz von, mit elektrischen Leitern versehenen Laminaten oder Bahnen aus hygroskopischem Werkstoff wie Karton, Filz, Gewebe welche in Kontakt mit der Unterbetonplatte verlegt werden, auszuschließen. Je nach dem Ermittlungssystem welches die Veränderung der Leitfähigkeit nutzt, bzw. die Veränderung der elektrischen Dispersion nutzt, werden die Leiter im ersten Fall als überlagerte Leiternetze, als Reihen überlagerter Leiter oder als Leiternetz mit einer überlagerten Reihe von Leitern, verlegt während im zweiten Fall die Leiter als einzige Serpentine, als eine Reihe von Serpentinen oder als überlagerte Reihen von Serpentinen verlegt werden.

Für die Ermittlung der elektrischen Leitfähigkeit der Unterbetonplatte und somit des Feuchtigkeitsgrades dieser, so dass die Feuchtstelle an der Unterbetonplatte mit einer gewissen Präzision lokalisiert werden kann (wichtig für di Lokalisierung von Leck- oder Einsickerstellen), schlägt die Erfindung die Verlegung einer Reihe von zueinander distanzierten Leitern vor welche kreuzweise überlagert sind so dass eine Lokalisierung gemäß den Achsen eines Diagrames möglich ist und zwar indem jene zwei sich kreuzenden Leiter ausfindig gemacht werden zwischen welchen zum Beispiel eine, durch Feuchtigkeit verursachte, höhere elektrische Leitfähigkeit angezeigt wird.

Erfindungsgemäß können die Leiter für die Ermittlung einzeln wesentlich gemäß dem Raster eines Schaubildes verlegt werden wobei an den Kreuzpunkten Klips verwendet werden können um an diesen Stellen einen direkten Kontakt zwischen den Leiter zu verhindern. Um das Verlegen zu vereinfachen können die Leiter bereits als Netz, ohne weiteres Trägermaterial und samt Isolierung an den Kreuzpunkten vorliegen. Gemäß einer Weiterentwicklung kann das Leiternetz auf einem Laminat, einem Filz oder auf einem Gewebe aufgebracht sein, wobei die Leiter so angeordnet sind dass sie mit der Unterbetonplatte in direktem Kontakt sind, die Leiter können auch in eine hygroskopisches Trägermaterial, z.B. Karton, Filz, eingearbeitet sein. Es ist nicht ausgeschlossen dass, im Falle von Kunststofflaminaten, die Leiter von, durch die Präsenz aufgetragener oder eingeschlossener leitender, Teilchen (z.B. Grafit), leitend gemachten Bereichen ersetzt werden.

Die Ermittlung der elektrischen Leitfähigkeit, bzw. der Veränderung der elektrischen Dispersion kann z.B. durch einen elektronischen Spannungsmesser oder ein entsprechendes bekanntes Messinstrument erfolgen. Vorteilhafterweise ist das Messinstrument mit einem optischen und/oder akustischem Signalgeber gekoppelt, weiters ist es möglich vorzusehen, dass selbsttätig Ermittlungszyklen, eventuell in einstellbaren Zeitintervallen, durchgeführt werden. Die erforderliche Spannung des Messstromes kann sehr niedrig sein und von Batterien oder von einem Netzgerät geliefert werden.

Die Anlage zur Feuchtigkeitsermittlung muss, infolge der Verlegung und der Trocknung der Unterbetonplatte, geeicht werden und zwar eventuell separat für jeden einzelnen Messkreislauf, um so betreffend die Leitfähigkeit, Ausgangswerte festzustellen und damit das Spannungsmessgerät dann eventuelle Abweichungen von diesen Ausgangswerten signalisieren kann. Es wird nicht ausgeschlossen, dass zwecks Angleichung der unterschiedlichen Ausgangswerte einer Anlage die einzelnen Werte durch elektrische Widerstände korrigiert werden um so für die einzelnen Messkreisläufe gleiche Ausgangswerte zu haben.

Im Falle verschiedener Messkreisläufe für eine selbe Unterbetonplatte, bzw. für einzelne Messkreisläufe verschiedener Unterbetonplatten, kann ein mechanischer oder elektronischer Wählschalter oder eine Umschaltvorrichtung vorgesehen sein, dadurch ist eine sequentiale Verbindung der einzelnen Messkreisläufe mit einem einzigen Spannungsmessgerät möglich. Die Erfindung schließt nicht aus, dass im Falle mehrerer Messkreisläufe jeder einzelne dieser mit einem optischen und/oder akustischem Signalgeber verbunden ist.

Die Erfindung wird anschließend anhand einiger, in den beigelegten Zeichnungen schematisch dargestellter, vorzuziehender Ausführungsbeispiele erfindungsgemäßer Anlagen zur Feuchtigkeitsermittlung näher erklärt, dabei erfüllen die Zeichnungen rein erklärenden, nicht begrenzenden Zweck.

Die Fig. 1 ist eine schematische Darstellung einer erfindungsgemäße Anlage zur Feuchtigkeitsermittlung mittels kammartig verlegten Leitern und einzelnen überlagerten Leitern welche orthogonal zu den kammartig verlegten Leitern verlaufen, wobei die Lokalisierung der Feuchtstelle überschlägig (gemäß Streifen entlang der einzelnen Leiter) erfolgen kann.

Die Fig. 2 zeigt schematisch die elektrische Verbindung mit einem einzigen Spannungsmessgerät wobei jeder der einzelnen Leiter mit einem optischen und/oder akustischem Signalgeber ausgestattet ist.

Die Fig. 3 ist eine schematische Darstellung einer erfindungsgemäßen Anlage zur Feuchtigkeitsermittlung welche aus zwei überlagerten Systemen von serpentinenartig verlegten Leitern, welche zueinander orthogonal verlaufen, besteht und womit eine präzise Lokalisierung (nach Punkten oder Maschen) der Feuchtstelle möglich ist.

Die Fig. 4 zeigt in perspektivischer Darstellung ein isolierendes Verbindungsteil welches an einem Kreuzpunkt von orthogonal überlagerten Leitern angebracht ist.

Die Fig. 5 zeigt ein isolierendes Verbindungsteil für sich kreuzende Leiter welches an einer Seite am Leiter einfädelbar und an der andern Seite aufklipsbar ist.

Die Fig. 6 zeigt ein isolierendes Verbindungsteil welches an beiden Seiten auf die sich orthogonal kreuzenden Leiter aufklipsbar ist.

Die Fig. 7 zeigt schematisch eine Anlage zur Feuchtigkeitsermittlung welche aus zwei Leiternetzen besteht.

Die Fig. 8 zeigt schematisch eine Anlage zur Feuchtigkeitsermittlung welches aus zwei Systemen quer überlagerter Einzelleiter besteht.

Die Fig. 9 zeigt schematisch eine Anlage zur Feuchtigkeitsermittlung welche aus kammartig verlegten Leitern in einer gleichen Ebene mit einzelnen Leitern besteht.

Die Fig. 10 zeigt schematisch eine Anlage zur Feuchtigkeitsermittlung welche aus zwei Systemen aus kammartig in der selben Ebene verlegten Leitern besteht.

Die Fig. 11 zeigt schematisch eine Anlage zur Feuchtigkeitsermittlung welche aus einem einzigen Messkreislauf mit einem serpentinenartigen Leite welcher in einer einzigen Ebene verlegt ist, besteht.

Die Fig. 12 zeigt schematisch eine Anlage zur Feuchtigkeitsermittlung bestehend aus mehreren Messkreisläufen wobei die Leiter schleifenförmig in einer einzigen Ebene verlegt sind.

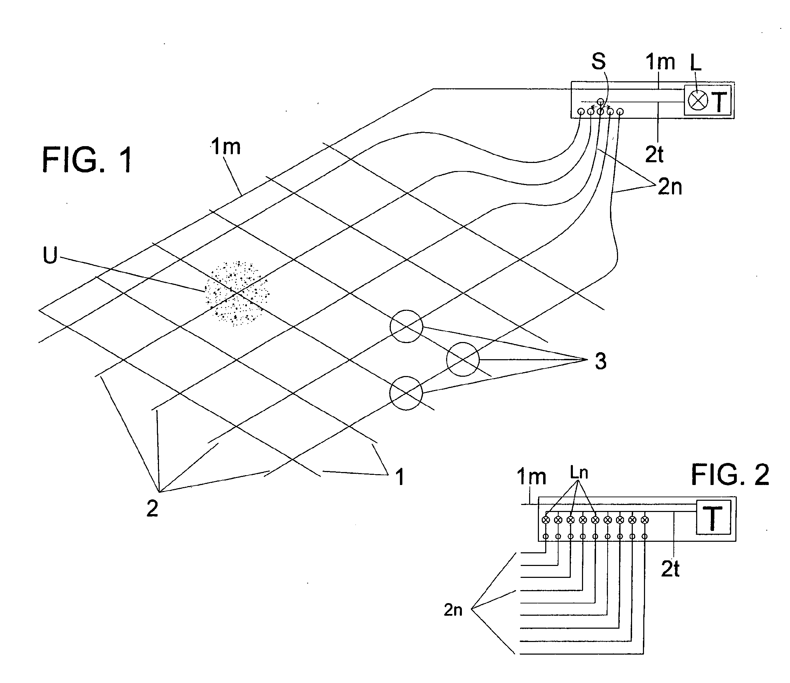

In der Unterbetonplatte oder anliegend an dieser sind zwei Leitersysteme 1, 2 (Fig. 1) vorgesehen, in einem dieser sind die Leiter 1 kammartig verlegt und an jeweils einem der Enden durch einen Verbindungsleiter 1 m verbunden während das zweite, in Bezug auf das erste, überlagerte oder unterlagerte System aus einer Reihe von einzelnen Leitern besteht welche zu den kammartig verlegten Leitern orthogonal verlaufen und einzeln mit dem Wähl- oder Umschalter S und dem Spannungsmesser T welcher vorzugsweise mit einem optischen und/oder akustischem Signalgeber L versehen ist, verbunden sind. Sobald der Wähl- oder Umschalter S die Verbindung 2t mit dem Spannungsmesser T und einem der Leiter 2 herstellt welcher im Bereich der Feuchtstelle U verlegt ist, wird das Spannungsmessgerät T eine Veränderung der Leitfähigkeit zwischen dem kammartigen Leitersystem 1 und dem einzelnen Leiter 2 und somit das Vorhandensein von Feuchtigkeit, anzeigen.

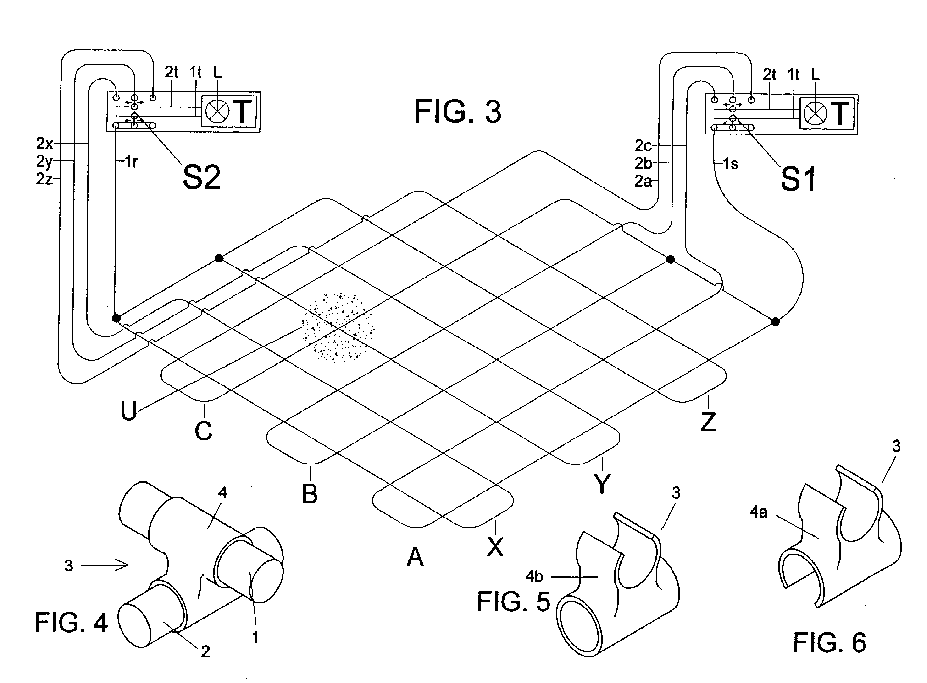

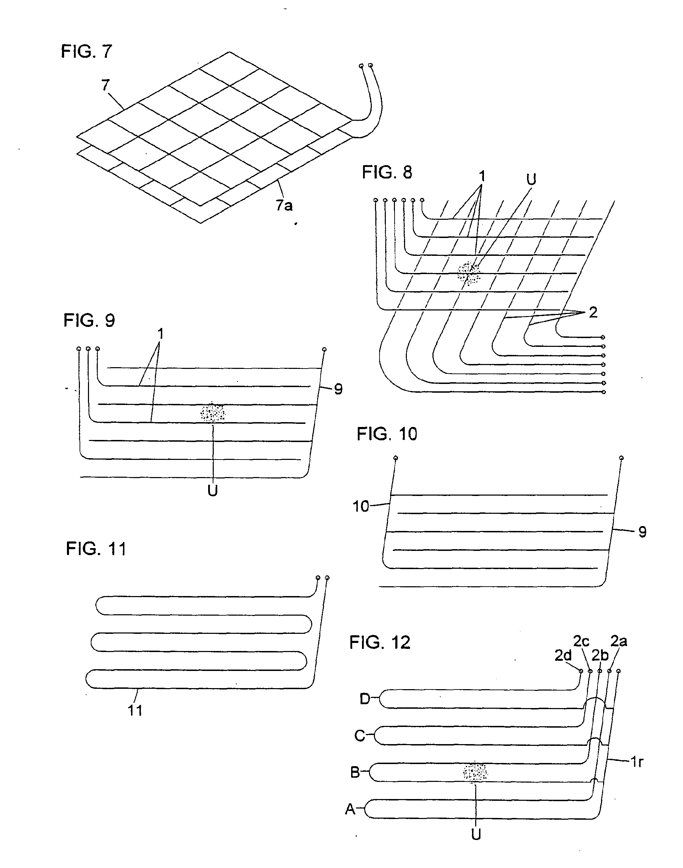

Dieses Ermittlungssystem ermöglicht eine grobe "streifenweise" Lokalisierung der Feuchtstelle an der Unterbetonplatte. Der Wähl- oder Umschalter S kann mechanischer oder elektronischer Art sein und eventuell so ausgestattet sein, dass er selbsttätig zyklusweise jeden der Leiter 2 mit dem Spannungsmesser verbindet welche dauernd mit dem System der kammartig verlegten Leiter verbunden 1 m ist. Um eine Feuchtigkeitsermittlung mit präziser Lokalisierung der Feuchtzone U zu realisieren ist es nötig über zwei Leitersysteme einzelner Leiter 1, 2 (Fig. 8) oder schleifenartig verlegter Leiter A, B, C; X, Y, Z (Fig. 3) welche zueinander orthogonal verlaufen zu verfügen, in diesen Fällen ist die Lokalisierung der Feuchtstelle U wie auf einem kartesianischem Schaubild möglich.

Die Reihe von Leiterschleifen A, B, C (Fig. 3) ist mittels Wähl- oder Umschalter S1 über die Verbindungen 1t, 2t mit dem Spannungsmesser T welcher einen optischen und/oder akustischen Signalgeber S aufweist, verbunden 1 s; 2a, 2b, 2c. Die zweite Reihe von Leiterschleifen X, Y, Z ist orthogonal zur ersten verlegt und mit dem Spannungsmesser T samt Signalgeber L verbunden 1 r, 2x, 2y, 2z. Nachdem der Spannungsmesser, bzw. der Signalgeber L, eine Änderung der elektrischen Dispersion für die Schleife C sowie auch für die Schleife Y anzeigt, ist es einfach die Feuchtstelle U im Bereich der Kreuzung zwischen den besagten Schleifen C und Y an der Unterbetonplatte zu lokalisieren.

Gemäß einer Weiterentwicklung der Erfindung kann die erfindungsgemäße Anlage zur Feuchtigkeitsermittlung auch für die Temperaturregelung und oder des Wasserdurchflusses genutzt werden um die Überschreitung des Taupunktes an den einzelnen Unterbetonplatten zu vermeiden.

Die Erfindung schließt nicht weitere unterschiedliche Anordnungen der Leiter aus, wie z.B.:
- in Form zweier überlagerter Netze 7, 7a (Fig. 7); in diesem Fall ist keine Lokalisierung der Feuchtstelle möglich,
- in Form zweier Systeme einzelner Leiter 1, 2 welche zueinander orthogonal verlaufen (Fig. 8); in diesem Fall ist eine verhältnismäßig präzise Lokalisierung der Feuchtstelle möglich,
- in Form kammartig verlegter Leiter 9 mit einzelnen Leitern 1 welche zwischen den ersten Leitern verlegt sind (Fig. 9); in diesem Fall ist eine grobe Lokalisierung der Feuchtstelle U gemäß dem Streifen welcher dem entsprechenden Leiter 1 entspricht möglich,
- in Form zweier Systeme kammartig verlegter Leiter 9, 10 (Fig. 10); in diesem Fall ist die Feuchtstelle nicht lokalisierbar,
- in Form eines einzigen serpentinenartig verlegten Leiters 11 (Fig. 11); in diesem Fall ist die Feuchtstelle nicht lokalisierbar,
- in Form einer Reihe schleifenartig verlegter Leiter A, B, C, D welche zueinander parallel verlaufen und in einer einzigen Ebene kammartig verlegt sind; in diesem Fall ist eine streifenweise Lokalisierung der Feuchtstelle möglich.

Natürlich sind jene Varianten welche keine Lokalisierung der Feuchtstelle ermöglichen für die Ermittlung der zu hohen Feuchtigkeit infolge Kondenswasserbildung geeignet, eine Lokalisierung der eventuellen (eher seltenen) Leckstellen der Anlage ist nicht möglich.
Die Anordnung der Leiter in einer einzigen Ebene (Fig. 9, 10, 11, 12) ermöglicht die Herstellung von Laminaten, Kartonen, Filzbahnen oder anderer ähnlicher Trägermaterialien in welchen die Leiter eingearbeitet oder aufgebracht sind wodurch das Verlegen und die elektrische Verbindung erleichtert wird.

## Patentansprüche

1. Anlage zur Feuchtigkeitsermittlung unter isolierenden und/oder wasserdichten Abdeckungen von Bodensohlen, Terrassen, Fußböden oder von Unterbetonplatten für Bodenheizung/-kühlung, bestehend aus einem Spannungsmesser (T) oder einem Gerät zur Ermittlung der elektrischen Leitfähigkeit, bzw. der elektrischen Dispersion, welches mit einem akustischem und/oder optischem Signalgeber (L) ausgestattet ist, **dadurch gekennzeichnet, dass** dieser Spannungsmesser oder dieses Messinstrument (T) elektrisch mit mindestens zwei Leitersystemen (1, 2), zwei Systeme von Leiterschleifen (A; B, C; X, Z) oder zwei Leiternetzen oder Leiterflächen (7, 7a) verbunden ist von denen beide in direktem Kontakt auf einer der horizontalen Flächen einer Unterbetonplatte für Bodenheizung/-kühlung oder einer Bodensohte verlegt sind ohne zueinander in direktem Kontakt zu stehen.

2. Anlage zur Feuchtigkeitsermittlung gemäß Anspruch 1, **dadurch gekennzeichnet, dass** eines der Leitersysteme (1, 2), der Systeme der Leiterschleifen (A, B, C; X, Y, Z) oder eines der Leiternetze oder Leiterflächen (7, 7a) in direktem Kontakt mit der unteren Fläche der Unterbetonplatte steht während das zweite Leitersystem, das zweite System der Leiterschleifen oder das zweite Leiternetz, bzw. die zweite Leiterfläche, mit der oberen Fläche der selben Unterbetonplatte in direktem Kontakt steht.

3. Anlage zur Feuchtigkeitsermittlung gemäß Anspruch 1, **dadurch gekennzeichnet, dass** eines der Leitersysteme (1, 2) oder auch beide, eines oder beide der Systeme von Leiterschleifen (A, B, B; X, Y, Z), ein oder beide der Leiternetze oder Leiterflächen (7, 7a) in der Unterbetonplatte eingearbeitet sind ohne dass sie gegenseitigen Kontakt haben.

4. Anlage zur Feuchtigkeitsermittlung gemäß Anspruch 1, **dadurch gekennzeichnet, dass** im Falle zweier Systeme kammartig verlegter Leiter (9, 10), die Leiter eines Systems oder eventuelle einzelne Leiter (1) in die Zwischenräume der Leiter (9) des zweiten Systems ragen oder auch im Falle schleifenartig, zueinander parallel verlegte Leiter (A, B, C, D) mit jeweils einzelnen Verbindungsleitern (2a, 2b, 2c, 2d), diese jeweils in einer einzigen Ebene verlegt und auf einem Trägerelement aus verschiedenen, eventuell hygroskopischen Werkstoffen wie Karton, Filz, Gewebe, eingearbeitet oder aufgebracht sein können.

5. Anlage zur Feuchtigkeitsermittlung gemäß Anspruch 1, **dadurch gekennzeichnet, dass** der Messkreislauf aus einem einzigen serpentinenartig, in einer einzigen Ebene verlegtem Leiter besteht.

6. Anlage zur Feuchtigkeitsermittlung gemäß den Ansprüchen von 1 bis 5, **dadurch gekennzeichnet dass**, im Falle mehrerer Messkreisläufe auf einer einzigen Unterbetonplatte oder auf mehreren Unterbetonplatten, die Ermittlung zyklisch gemäß einer Sequenz von Verbindungen welche, eventuell mittels mechanischem oder elektronischem Wähl- oder Umschalter (S, S1, S2), erfolgt.

7. Anlage zur Feuchtigkeitsermittlung gemäß den Ansprüchen von 1 bis 6, **dadurch gekennzeichnet, dass** jeder der einzelnen Messkreisläufe (2n; 2a, 2b, 2c; 2x, 2y, 2z) mit einem akustischem und/oder optischem Signalgeber (Ln) ausgestattet ist.

8. Anlage zur Feuchtigkeitsermittlung gemäß den Ansprüchen von 1 bis 7, **dadurch gekennzeichnet, dass** die Ermittlung der Überschreitung eines Feuchtigkeits-Grenzwertes als Impuls für die Regelung der Heizungs-/Kühlanlage genutzt wird.
